## Europäisches Patentamt
## European Patent Office
## Office européen des brevets

(19)

(11) Veröffentlichungsnummer: **0 013 772**
**B1**

(12) **EUROPÄISCHE PATENTSCHRIFT**

(45) Veröffentlichungstag der Patentschrift:
25.05.83

(21) Anmeldenummer: **79200043.2**

(22) Anmeldetag: **24.01.79**

(51) Int. Cl.³: **B 23 P 19/02**, B 25 B 27/02,
F 01 D 5/00

(54) **Vorrichtung zur Demontage von einer Rotor-Endschaufel.**

(43) Veröffentlichungstag der Anmeldung:
**06.08.80 Patentblatt 80/16**

(45) Bekanntmachung des Hinweises auf die Patenterteilung:
**25.05.83 Patentblatt 83/21**

(84) Benannte Vertragsstaaten:
**CH DE FR NL SE**

(56) Entgegenhaltungen:
**US-A-2 128 268**
**US-A-3 857 158**
**US-A-3 908 258**

(73) Patentinhaber: **BBC Aktiengesellschaft Brown, Boveri & Cie., Haselstrasse, CH-5401 Baden (CH)**

(72) Erfinder: **Ritter, Urs, Erlinsbacherstrasse 170, CH-4655 Stüsslingen (CH)**
Erfinder: **Rütti, Willi, Hertensteinstrasse 31, Ch-5415 Nussbaumen (CH)**

BUNDESDRUCKEREI BERLIN

Vorrichtung zur Demontage von einer Rotor-Endschaufel

Die vorliegende Erfindung betrifft eine Vorrichtung zur Demontage von einer Rotor-Endschaufel von Dampfturbinen.

Zur Demontage der letzten Laufschaufelreihe oder von nur einzelnen Rotor-Endschaufeln des Niederdruckteils von Dampfturbinen mußte bislang stets mindestens eine Hälfte des Schaufelträgers abgehoben werden, was einen erheblichen Aufwand und Zeitverlust bedeutete. Insbesondere bei den heute üblichen Dampfturbinen mit großen Leistungen sind die Dimensionen der Niederdruckgehäuse sehr groß und deren Einzelteile sehr schwer, so daß die beabsichtigte Demontage sehr aufwendig wird.

Es ist daher Aufgabe der vorliegenden Erfindung, eine Vorrichtung zu schaffen, mit welcher auf einfache Weise einzelne Endschaufeln demontiert werden können.

Die vorstehend genannte Aufgabe wird erfindungsgemäß gelöst durch eine bügelartig ausgebildete Schwenkeinrichtung, die an ihrem oberen Ende einen verschiebbaren Ring und an ihrem unteren, dem Rotor der Dampfturbine zugekehrten Ende eine Spannvorrichtung mit Haltebacken zum Festhalten des Fußes der Rotor-Endschaufel aufweist.

Die Anordnung einer derartigen bügelartig ausgebildeten Schwenkeinrichtung ergibt den Vorteil, daß sie an einer Hebevorrichtung, beispielsweise an einem Kran aufgehängt und auf einfache Weise nach dem Demontieren der betreffenden Schaufel aus der Turbine herausgeschwenkt werden kann.

Die bügelartige Ausbildung der Schwenkrichtung ist weiterhin dadurch vorteilhaft, daß keine Behinderung bei der Demontage auftritt, da der Vertikalarm der Schwenkeinrichtung seitlich der Spannvorrichtung und von dieser distanziert angeordnet ist.

In der Zeichnung ist ein Ausführungsbeispiel der Erfindung vereinfacht dargestellt.

Es zeigt

Fig. 1 eine Seitenansicht der Demontagevorrichtung mit bügelartig ausgebildeter Schwenkeinrichtung,

Fig. 2 eine Draufsicht der Demontagevorrichtung gemäß Fig. 1 im vergrößerten Maßstab.

In den Figuren sind gleiche Teile mit denselben Bezugszahlen versehen.

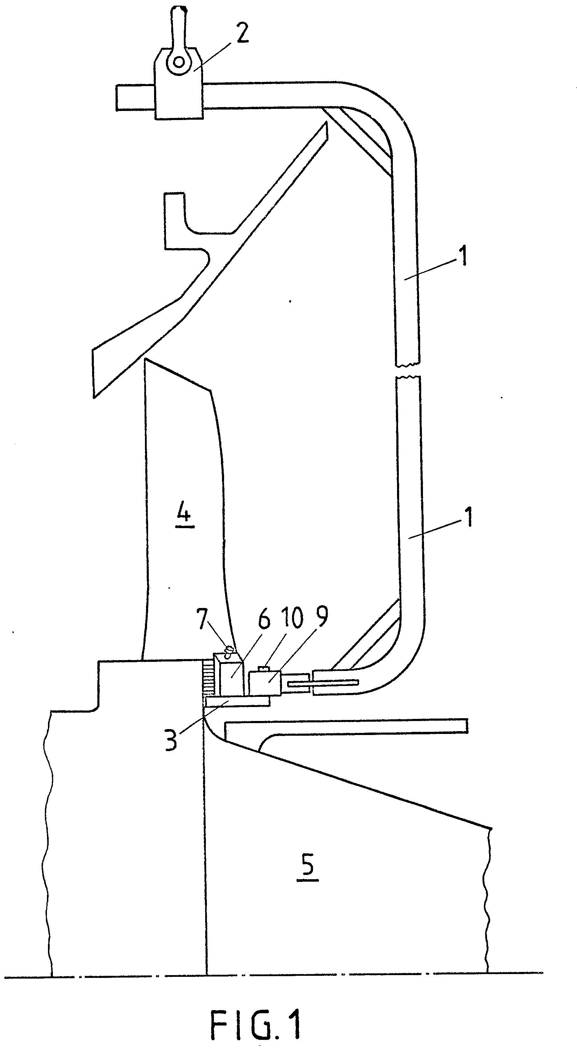

Gemäß Fig. 1 ist an einer bügelartig ausgebildeten Schwenkeinrichtung 1 an deren oberen Ende ein Ring 2 angebracht, welcher derart verschiebbar angeordnet ist, daß der Aufhängepunkt jeweils genau über dem Schwerpunkt der Demontagevorrichtung einstellbar ist, wenn eine Turbinenschaufel 4 daran befestigt ist. Am unteren Ende der Schwenkeinrichtung 1 ist eine Spannvorrichtung 3 vorgesehen, welche am Fuß einer Turbinenschaufel 4 eines Rotors 5 angreift.

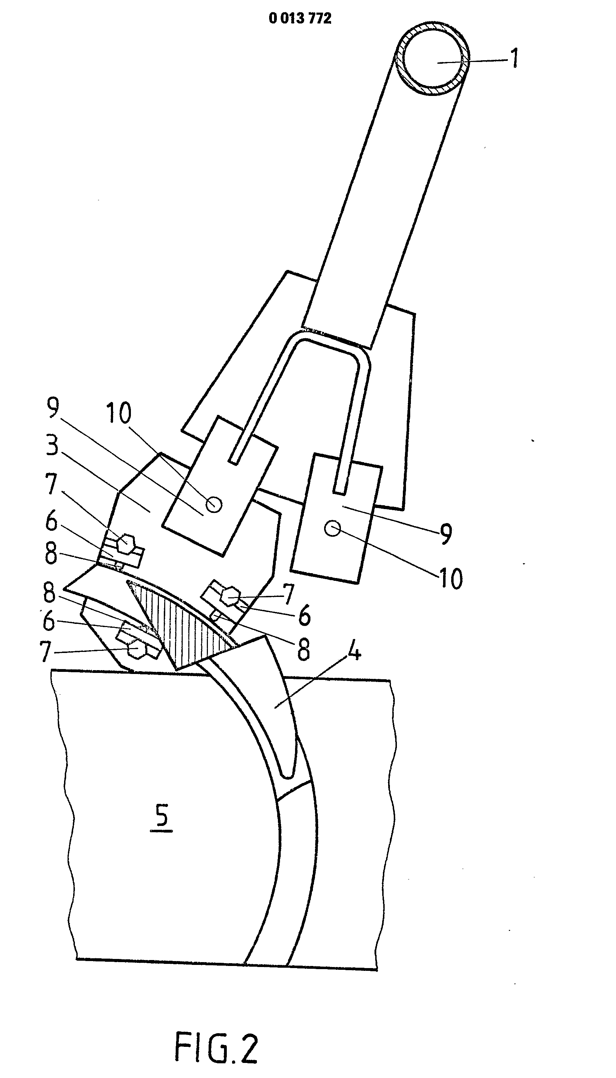

Auf der Spannvorrichtung 3 (Fig. 2) sind drei mit Schrauben 7 versehene Haltebacken 6 befestigt. Die Haltebacken 6 weisen an der Auflageseite der Turbinenschaufel vier Keile 8 auf, welche aus einem weichen Material bestehen, um Beschädigungen der Turbinenschaufel 4 zu vermeiden. Die Spannvorrichtung 3 ist mittels Aufnahmen 9 und Sicherungen 10 an der Schwenkeinrichtung 1 befestigt. Vorzugsweise sind die Aufnahmen 9 paarweise in einem Winkel zueinander vorgesehen, wodurch die Vorrichtung für beide Fluten einer Turbinen-Niederdruckstufe verwendbar ist.

Mit der erfindungsgemäßen Demontagevorrichtung können durch Öffnen bloß einer halben Turbinenhaube, d. h. in der Regel der oberen Hälfte des Niederdruckgehäuses, einzelne Endstufenschaufeln des Niederdruckteiles demontiert werden.

## Patentanspruch

Vorrichtung zur Demontage von einer Rotor-Endschaufel (4) von Dampfturbinen, gekennzeichnet durch eine bügelartig ausgebildete Schwenkeinrichtung (1), die an ihrem oberen Ende einen verschiebbaren Ring (2) und an ihrem unteren, dem Rotor (5) der Dampfturbine zugekehrten Ende eine Spannvorrichtung (3) mit Haltebacken (6) zum Festhalten des Fußes der Rotor-Endschaufel (4) aufweist.

## Claim

Apparatus for removing the end blade (4) of a rotor from steam turbines, characterised by a pivoting device (1) which is designed in the manner of a shackle and which has at its upper end a displaceable ring (2) and at its lower end facing the rotor (5) of the steam turbine a clamping device (3) with retaining jaws (6) for the firm retention of the foot of the end blade (4) of the rotor.

## Revendication

Appareil pour démonter une pale (4) du dernier disque d'un rotor de turbine à vapeur, caractérisé par un dispositif pivotant (1) en forme d'étrier qui présente, à son extrémité supérieure, une bague (2) pouvant coulisser et, à son extrémité inférieure, tournée vers le rotor (5) de la turbine à vapeur, un appareil de serrage (3) comportant des mâchoires de maintien (6) destinées à immobiliser le pied de la pale (4) du dernier disque du rotor.

# FIG.1

FIG.2